# EUROPEAN PATENT SPECIFICATION

(11) **EP 2 735 493 B1**
(45) Date of publication and mention of the grant of the patent: **24.02.2016**
(21) Application number: 13193855.7
(22) Date of filing: 21.11.2013
(51) Int. Cl.: B62B 5/00, B62B 3/02, F16F 7/00

(54) **Silencer for a roll container**
Schalldämpfer für einen Rollenbehälter
Silencieux pour conteneur roulant

(30) Priority: 27.11.2012 FI 20126244
(43) Date of publication of application: 28.05.2014
(73) Proprietor: K. Hartwall Oy AB, 01150 Söderkulla (FI)
(72) Inventor: Tiilikainen, Markku, 01150 Söderkulla (FI); Nyholm, Thomas, 01150 Söderkulla (FI)
(74) Representative: Seppo Laine Oy

(56) References cited:
- EP-A1- 0 700 804
- DE-A1- 19 531 167
- DE-U1-202007 017 928
- DE-U1-202013 100 080
- US-A- 4 600 204

## Description

### FIELD OF THE INVENTION

The present invention relates to logistics equipment. In particular, the invention relates to roll container accessories. More specifically, the invention relates to a silencer for a roll container according to the preamble portion of claim 1.

With reference to DE 202013100080 U1, the applicant has voluntarily limited the scope of the present application, and submitted separate claims for the Federal Republic of Germany.

### BACKGROUND ART

Roll containers are wheeled pallets which are used to transport and store parcelled goods. Roll containers are particularly popular in delivering parcels from a storage or logistics hub to a retailer. Conventional roll containers are constructed of metal frame sections which are attached to each other by means of fixed attachments and hinges. During transport these metal frame sections make contact, which results in a considerably amount of noise which is a strain for the occupational safety logistics employees.

In addition to occupational safety regulations, certain municipalities may impose noise legislation regulating the level noise acceptable for deliveries in residential areas. One example of legislation regulating peak noise during loading and unloading of goods in transportation is the so called TNO report MON-RPT-2010-00466 (2010 update). The report divides the day into three periods and defines acceptable noise levels for each period. According to the TNO report there are no restrictions for the period of day beginning at 7 a.m. and ending at 7 p.m. However, for the period from 7 p.m. to 11 p.m. the report sets a maximum noise level of 65 dB(A). For the period from 11 p.m. to 7 a.m. the level further restricted to 60 dB(A). Accordingly, the maximum noise levels for late deliveries set a rather high standard for logistics equipment used for such deliveries.

The noise generated by roll containers is a known issue for which there have been several attempts to produce low-noise roll containers. JP 2002347765 A, for example, discloses a silencing liner to be applied to inner surfaces of the profiles of frame sections of roll containers for dampening vibrations thereof. However, the silencing solution proposed by JP 2002347765 A may not be retro-fitted to existing roll containers, whereby it is not feasible for solving the problem of silencing conventional roll containers. Furthermore, while JP 2002347765 A does have silencing properties, it does not sufficiently eliminate sound resulting from two metal pieces making contact.

US 4600204 A discloses a shopping cart (10) with a bumper arrangement (61) for reducing the effect of impacts between two shopping trolleys. A bumper (62) of the bumper arrangement is attached to the meshing (36) of a shopping cart by means of a separate securing rod (71). A vertically extending main rod (72) of the securing rod (71) compresses the bumper (62) against the meshing (36). The bumper (62) is contacted by the inner surface of the securing rod (71), namely the vertically extending main rod (72) thereof.

JP 2003321025 A discloses a plastic sleeve which may be retrofitted on a roll container profile. While the sleeve of JP 2003321025 A eliminates some rattle, it is not ideal because fails to dampen the vibration of the profile compared to JP 2002347765 A.

### AIM OF THE INVENTION

It is therefore an aim of the present invention to provide a silencer profile for a roll container which can be retro-fitted and which eliminates noise resulting from metal frame sections of the roll container making contact.

### SUMMARY

The aim of the present invention is achieved with aid of a novel roll container with a silencer including an engaging portion having an interior surface which is configured to engage to a profile of the roll container in an at least partly enclosing manner. The engaging portion also has an exterior surface which opposes the interior surface. The silencer also includes a compression portion which is formed on the exterior surface of the engaging portion for receiving external impacts. The compression portion features a relieved profile for extending the compression length the compression portion. The compression portion has durometer value which is substantially smaller than the durometer value of the engaging portion.

More specifically, the roll container according to the present invention is characterized by the characterizing portion of claim 1.

### BENEFITS

Considerable benefits are gained with aid of the present invention. Similar to known retro-fit silencers, the novel silencer has an engaging portion which may be manufactured from a durable material which is suitable for firmly enclosing the profile.

### BRIEF DESCRIPTION OF DRAWINGS

In the following, exemplary embodiments of the invention are described in greater detail with reference to the accompanying drawings in which:
Fig. 1 presents a side elevation view of a buffer according one embodiment in a closed configuration,
Fig. 2 presents an isometric view of the buffer profile of Fig. 1 in an opened configuration,
Fig. 3 presents a side elevation view of a buffer according to a second embodiment,
Fig. 4 presents a side elevation view of a buffer profile according to a third embodiment in an opened configuration,
Fig. 5 presents a side elevation view of buffer profile of Fig. 4 in a closed configuration,
Fig. 6a presents a rear isometric view of the buffer profile of Fig. 4,
Fig. 6b presents a rear isometric view of the buffer profile of Fig. 5,
Fig. 7a presents a front isometric view of the buffer profile of Fig. 4,
Fig. 7b presents a front isometric view of the buffer profile of Fig. 5,
Fig. 8 presents a side elevation view of the buffer profile of Fig. 4 arranged to the meshing of a roll container, and
Fig. 9 presents a side elevation view of the buffer profile of Fig. 5 arranged to the meshing of a roll container.

### DETAILED DESCRIPTION OF PREFERRED EMBODIMENTS

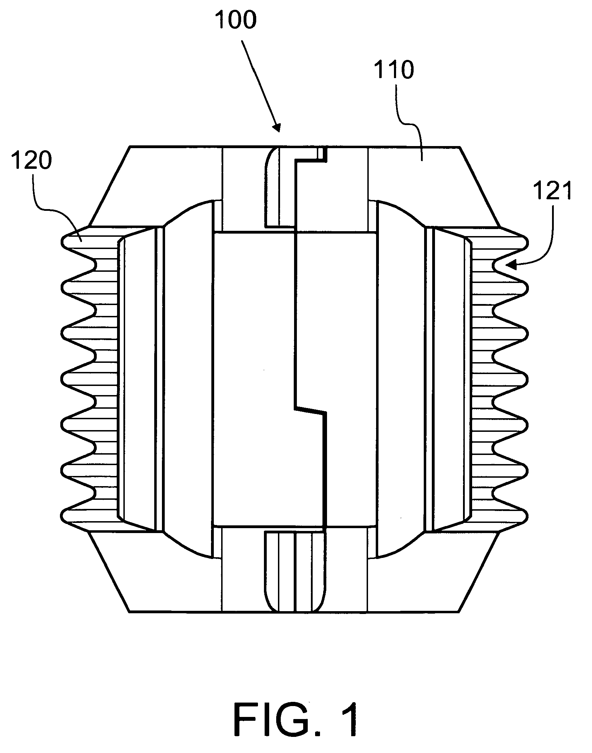

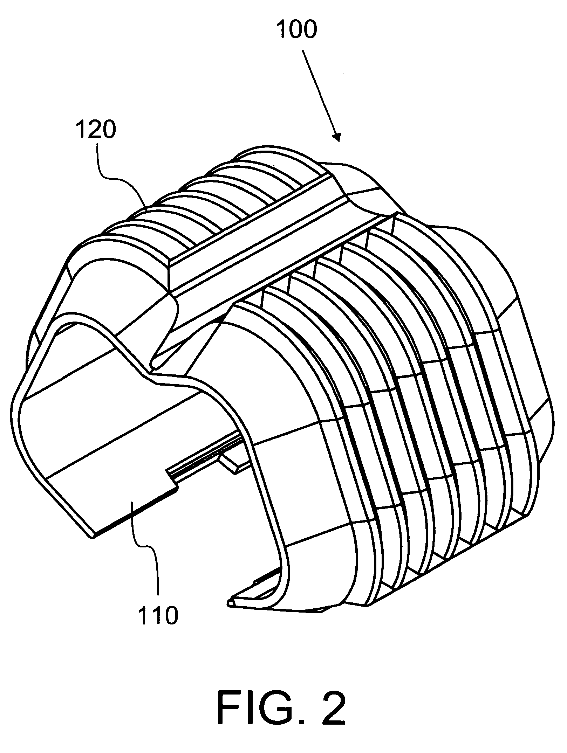

The first embodiment of the invention is presented Figs. 1 and 2 which show one exemplary silencer 100 in an open and closed configuration, respectively. The silencer 100 shown in the figures includes an engaging portion 110, the interior surface of which is configured to enclose a rounded quadrilateral roll container profile. The engaging portion 110 is made of durable material having a durometer value in the range of 90 to 100 shore A, preferably 96 to 100 shore A. Suitable materials for the engaging portion 110 include PA, PP, HDPE or hard PVC. The material of the engaging portion 110 is in other word selected primarily to withstand strain. The engaging portion 110 is designed to feature one part having two halves connected to each other from a hinging seam and from an opposing snap fit. Fig. 2 presents one example of a hinged single-body construction. Alternatively the engaging portion 100 could be constructed from two separate halves which may be joined together by two opposing snap fits (not shown).

The exterior surface of the engaging portion, i.e. the outer envelope surface, includes a compression portion 120 which is intended for receiving external impacts originating from, for example, various parts of a roll container making contact or from two roll containers coming into contact. The compression portion 120 features a relieved profile 121 for extending the compression length the compression portion 120. A *relief* is in context referred to as a reduction of material compared to a solid design. In the example shown in Figs. 1 and 2, the profile is relieved by means of a plurality of external recesses. In other words the outer envelope surface of the compression portion 120 features grooves which extend around the axis of the silencer 100 and therefore around the axis of the receptive profile. The recesses make the compression portion 120 more prone to deform when subjected to an impact as the compression length is extended compared to a solid structure.

The compression portion 120 is made of material which has a durometer value which is substantially smaller than the durometer value of the engaging portion 110. Referring to the exemplary durometer value 90 to 100 shore A for the engaging portion 110, the corresponding durometer value for the compression portion 120 would be in the range of 50 to 70 shore A. Suitable materials for the compression portion 120 include TPE and soft PVC, for example. In other words, the durometer value of the compression portion 120 is preferably at most 80 per cent of the durometer value of the engaging portion 110. The materials of the engaging portion 110 and compression portion 120 need necessarily not be of different materials; they may be selected of the same material composition such modified to yield different durometer values.

A particularly advantageous construction for such a silencer may be produced by means of a multi-compound mold piece, wherein the engaging portion 110 and the compression portion 120 are of different compounds having different durometer values. This approach makes is possible to produce the silencer in a single manufacturing stage by simultaneously ensuring that the two portions 110, 120 are tightly joined.

On a general level, the silencer 100 comprises a main extending dimension, wherein the portions 110, 120 of the silencer 100 are shapes defined in the normal plane of the main extending dimension of the silencer 100. Accordingly, the first embodiment described above may therefore by modified while maintaining similar technical effects.

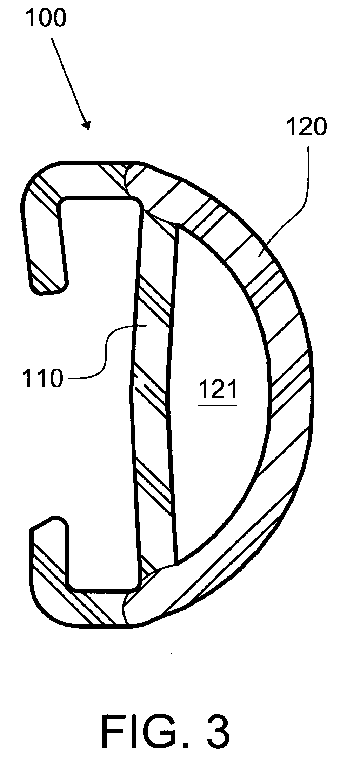

The second embodiment of the invention is presented Fig. 3 which shows one exemplary silencer 100 which is intended to be attached to a rectangular profile by means of a snap fit and which features an inner relief. The second embodiment features a compression portion 120 which extends in a looping fashion from and to the exterior surface of the engaging portion 110 so as to form a hollow flexing cavity 121. More precisely, the compression portion 120 is integrated to the engaging portion 110 such that the compression portion 120 protrudes from one point of the engaging portion 110 and merges into another point of the engaging portion 110 so as to form the flexing cavity 121 within the loop defined by the compression portion 120 and the engaging portion 110. From Fig. 3 is may be seen how the two portions 110, 120, which are joined through multi-compound molding, merge together. The compounds are distinguished in the Figure by opposing hashing angles. The flexing cavity 121 is therefore defined by the external surface of the engaging portion 110 and the compression portion 120. As in the first embodiment, the compression portion 120 is preferably an integral part of the silencer profile (100) by means of a multi-compound mold piece, for example.

The hollow flexing cavity 121 is configured to buckle, i.e. collapse, elastically when subjected to an impact. Because the compression portion 120 is relieved by means of such an inner cavity and because the compression portion 120 is made of a material with a relatively low durometer value, the construction is able to effectively dampen sound resulting from roll container elements making contact.

Also the engaging portion 110 differs from that of the first embodiment. The engaging portion 110 according to the second embodiment is configured to enclose a profile of the roll container only partly. The interior surface for engaging with the profile of a roll container is formed by the surfaces defining the imaginary volume for receiving the profile, i.e. the surfaces resembling an inverted letter C in Fig. 3. Fig. 3 also shows that the engaging portion 110 features two opposing claws which are configured to snap on to a thin rectangular profile. It is to be understood that the engaging portion 110 may be further modified to be suitable for other profiles without departing from the claimed inventive concept.

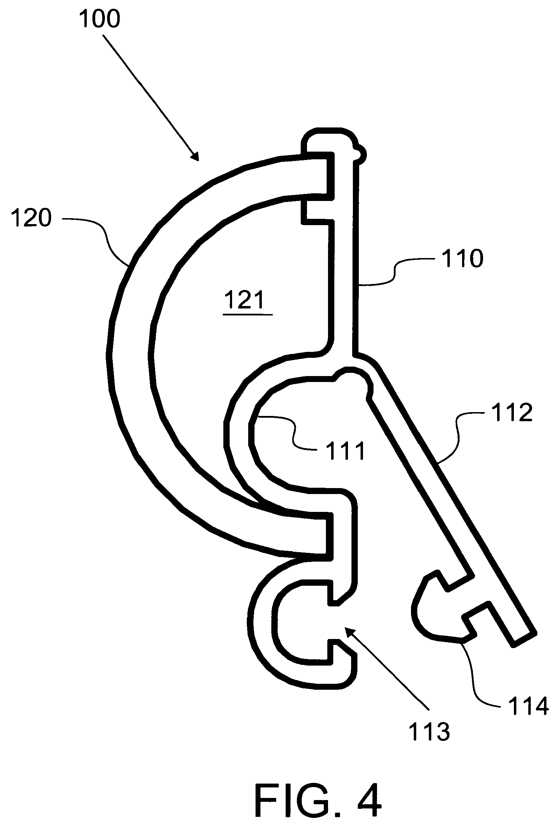

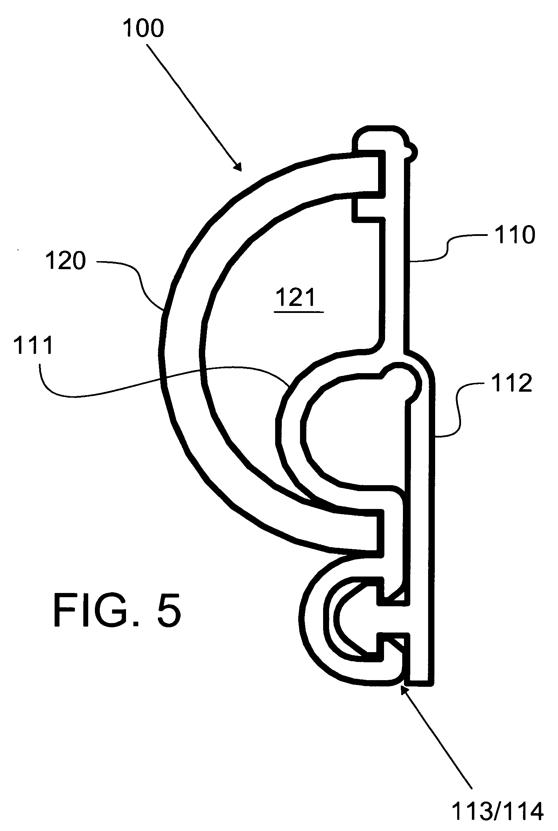

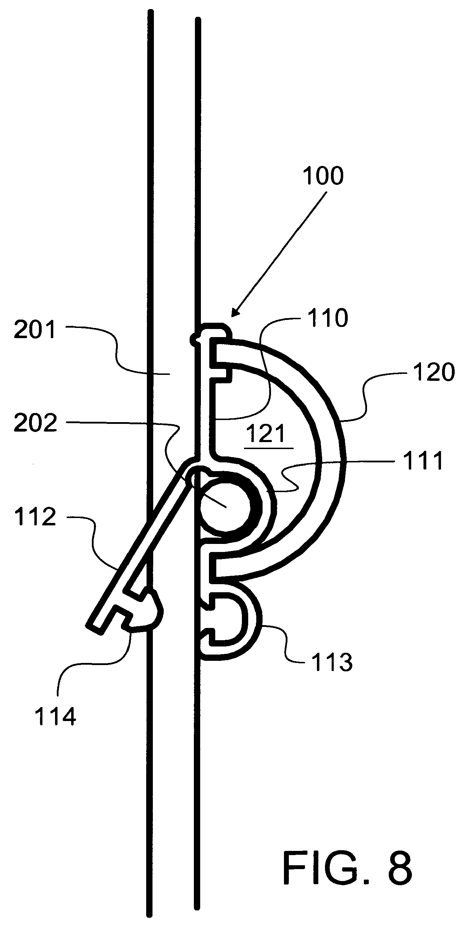

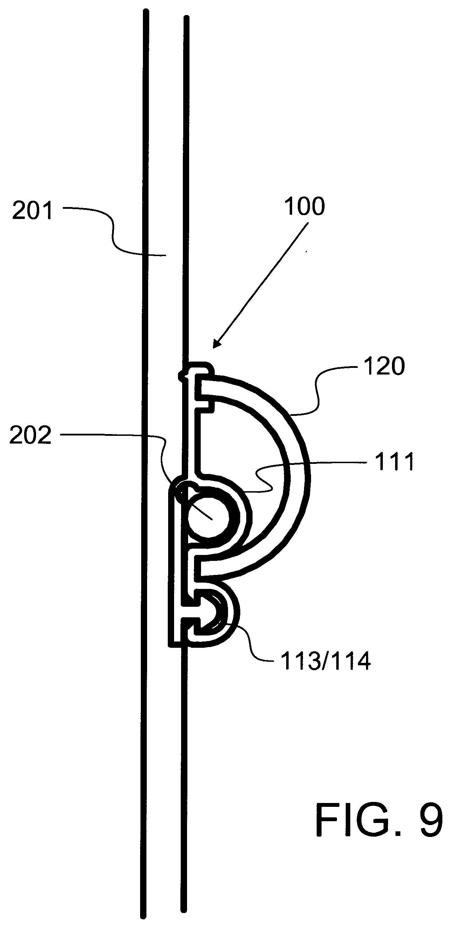

The third embodiment of the invention is presented in Figs. 4 to 9 which show a different approach to designing the engaging portion 110. According to the third embodiment, the engaging portion 110 has been provided with a recess 111 for at least partially embedding a profile 202, particularly a thin circular profile such as a horizontal meshing wire of the roll container (Figs. 8 and 9). The compression portion 120 is similar to that described in connection with the second embodiment (Fig. 3). According to the third embodiment, the compression portion 120 and the recess 111 extend in the same dimension and to the same direction from the engaging portion 110 such that the compression portion 120 extends farther than the recess 111 (Figs. 4 and 5).

The engaging portion 110 includes a counterpart portion 112 which is pivotably attached to the engaging portion 110, whereby the engaging portion 110 and the counterpart portion 112 are provided with mutually cooperating form fitting conformations 113, 114 for locking the engaging portions 110 around the profile of the roll container. In this respect, it is the internal surfaces of the recess 111 and the corresponding surface of the counterpart portion 112 that form the internal surface of the silencer for engaging with the profile of a roll container. Also the counterpart portion 112 is an integral part of the silencer 100, wherein the counterpart portion 112 has two opposing ends, the first of which is pivotably merged into the engaging portion 110 and the opposing second is provided with the form fitting conformation 114. Thus, the counterpart portion 112 is configured to close the recess 111 of the engaging portion 110 when the form fitting conformations 113, 114 are interlocked, wherein the recess 111 and the counterpart portion 112 form a closed cavity for receiving the profile 202 of the roll container (Figs. 5 and 8).

Compared to the second embodiment shown in Fig. 4, the two portions 110, 120 in the third embodiment are more prominently distinguished as the first portion 110 is shaped to provide attachment recesses for the second portion 120. The inner surfaces of the attachment recesses of the first portion 110 provide ample gripping surface for the external surfaces of the second portion 120, which is preferable to take into consideration when designing the multi-compound piece and mold.

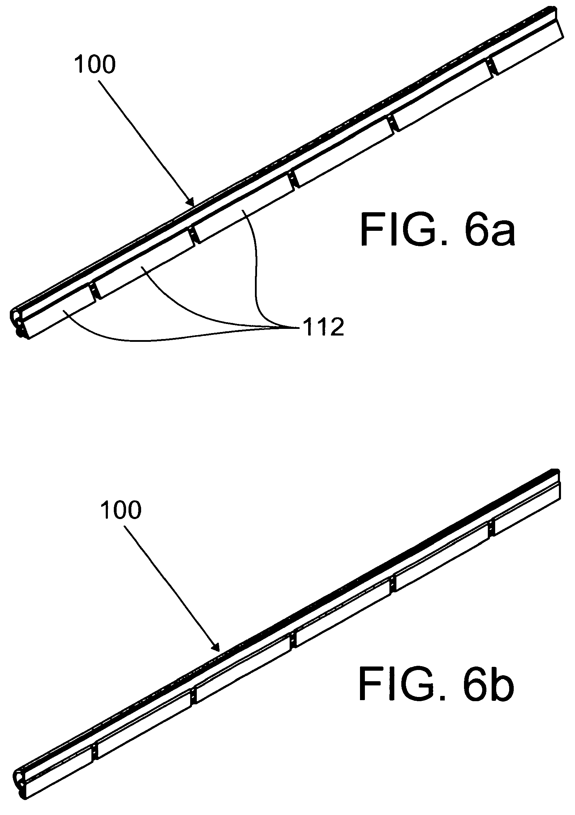

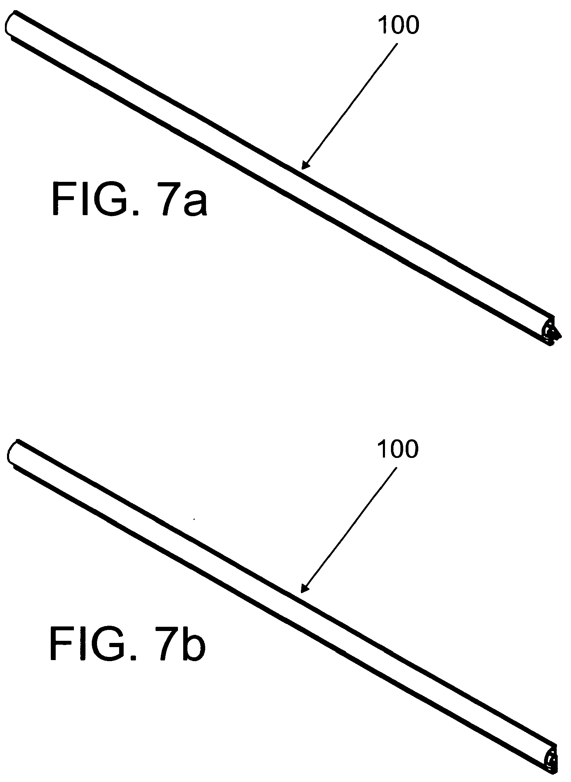

Figs. 6 and 7 illustrate that the silencer according to the third embodiment - as well as to the second embodiment alike - may be constructed as a profile. According to the third embodiment, the silencer 100 comprises a plurality of counterpart portions 112 arranged to single engaging portion 110 successively along the main extension dimension. The counterpart portions 120 are separated by a gap which is configured to receive a vertical mesh wire of the roll container. The gaps are orthogonal to the main extending dimension of the silencer profile 100. As in the first and second embodiments, the profile-like silencer 100 features a main extending dimension such that the portions of the silencer 100 are shapes defined in the normal plane of the main extending dimension of the silencer profile 100. Furthermore the profile 202 of the roll container is parallel to the main extending dimension of the silencer profile 100.

**TABLE 1: LIST OF REFERENCE NUMBERS.**

| **Number** | **Part** |
|---|---|
| 100 | silencer |
| 110 | engaging portion |
| 111 | recess |
| 112 | counterpart portion |
| 113 | form fitting conformation |
| 114 | form fitting conformation |
| 120 | compression portion |
| 121 | flexing cavity |
| 201 | profile: vertical meshing wire |
| 202 | profile: horizontal meshing wire |

## Claims (Claims for the following Contracting State(s): AL, AT, BE, BG, CH, CY, CZ, DK, EE, ES, FI, FR, GB, GR, HR, HU, IE, IS, IT, LI, LT, LU, LV, MC, MK, MT, NL, NO, PL, PT, RO, RS, SE, SI, SK, SM, TR)

1. A roll container comprising a silencer (100), which includes an engaging portion (110) which comprises:
- an interior surface which is configured to engage to a profile of the roll container in an at least partly enclosing manner, and
- an exterior surface opposing the interior surface,
wherein the material of the engaging portion (110) has a first durometer value, **characterized by** a compression portion (120) for receiving external impacts, which compression portion (120):
- is formed on the exterior surface of the engaging portion (110) for receiving external impacts,
- comprises a relieved profile (121) for extending the compression length of the compression portion (120), and
- has a second durometer value which is substantially smaller than the first durometer value of the engaging portion.

2. The roll container according to claim 1, wherein the silencer (100) is a multi-compound mold piece, wherein the engaging portion (110) and the compression portion (120) are of different compounds having different durometer values.

3. The roll container according to claim 1 or 2, wherein the second durometer value is at most 80 per cent of the first durometer value.

4. The roll container according to claim 1, 2 or 3, wherein the durometer value is a shore A value.

5. The roll container according to claim 4, wherein the first durometer value is in the range of 90 to 100 shore A and the second durometer value is in the range of 50 to 70 shore A.

6. The roll container according to any of the preceding claims, wherein the relieved profile (121) of the compression portion (120) comprises a plurality of external recesses.

7. The roll container according to claim 6, wherein said recesses are grooves.

8. The roll container according to claim 6 or 7, wherein the interior surface of the engaging portion (110) is configured to entirely enclosing manner the profile of the roll container.

9. The roll container according to any of claims 1 to 5, wherein the compression portion (120) extends from and to the exterior surface of the engaging portion (110) so as to form a hollow flexing cavity (121) which is defined by said external surface of the engaging portion (110) and the compression portion (120), wherein the hollow flexing cavity (121) is configured to buckle/collapse elastically.

10. The roll container according to claim 9, wherein the compression portion (120) extends in a looping fashion.

11. The roll container according to claim 9 or 10, wherein the compression portion (120) is an integral part of the silencer profile (100)

12. The roll container according to claim 9, 10 or 11, wherein the compression portion (120) is integrated to the engaging portion (110), wherein the compression portion (120) protrudes from one point of the engaging portion (110) and merges into another point of the engaging portion (110) so as to form the flexing cavity (121) within the loop defined by the compression portion (120) and the engaging portion (110).

## Claims (Claims for the following Contracting State(s): DE)

1. A roll container comprising a silencer (100), which includes:
- an engaging portion (110) made of a material having a first durometer value and comprising:
• an interior surface which is configured to engage to a profile of the roll container in an at least partly enclosing manner, and
• an exterior surface opposing the interior surface, and
- a compression portion (120) for receiving external impacts, which compression portion (120):
• is formed on the exterior surface of the engaging portion (110) for receiving external impacts,
• comprises a relieved profile (121) for extending the compression length of the compression portion (120), and
• has a second durometer value which is substantially smaller than the first durometer value of the engaging portion,
**characterized in that** the second durometer value is at most 80 per cent of the first durometer value.

2. The roll container according to claim 1, wherein the silencer (100) is a multi-compound mold piece, wherein the engaging portion (110) and the compression portion (120) are of different compounds having different durometer values.

3. The roll container according to claim 1 or 2, wherein the durometer value is a shore A value.

4. The roll container according to claim 3, wherein the first durometer value is in the range of 90 to 100 shore A and the second durometer value is in the range of 50 to 70 shore A.

5. The roll container according to any of the preceding claims, wherein the relieved profile (121) of the compression portion (120) comprises a plurality of external recesses.

6. The roll container according to claim 5, wherein said recesses are grooves.

7. The roll container according to claim 5 or 6, wherein the interior surface of the engaging portion (110) is configured to entirely enclosing manner the profile of the roll container.

8. The roll container according to any of claims 1 to 4, wherein the compression portion (120) extends from and to the exterior surface of the engaging portion (110) so as to form a hollow flexing cavity (121) which is defined by said external surface of the engaging portion (110) and the compression portion (120), wherein the hollow flexing cavity (121) is configured to buckle/collapse elastically.

9. The roll container according to claim 8, wherein the compression portion (120) extends in a looping fashion.

10. The roll container according to claim 8 or 9, wherein the compression portion (120) is an integral part of the silencer profile (100)

11. The roll container according to claim 8, 9 or 10, wherein the compression portion (120) is integrated to the engaging portion (110), wherein the compression portion (120) protrudes from one point of the engaging portion (110) and merges into another point of the engaging portion (110) so as to form the flexing cavity (121) within the loop defined by the compression portion (120) and the engaging portion (110).

## Patentansprüche (Patentansprüche für folgende(n) Vertragsstaat(en): AL, AT, BE, BG, CH, CY, CZ, DK, EE, ES, FI, FR, GB, GR, HR, HU, IE, IS, IT, LI, LT, LU, LV, MC, MK, MT, NL, NO, PL, PT, RO, RS, SE, SI, SK, SM, TR)

1. Ein Rollbehälter, aufweisend einen Geräuschdämpfer (100), der einen Eingriffsabschnitt (110) aufweist, welcher aufweist:
- eine Innenfläche, welche eingerichtet ist, um mit einem Profil des Rollbehälters in einer zumindest teilweise umgebenden Art im Eingriff zu stehen, und
- eine Außenfläche, welche der Innenfläche entgegengesetzt ist,
wobei das Material des Eingriffsabschnitts (110) einen ersten Härtewert hat, **gekennzeichnet durch** einen Drückabschnitt (120) zum Empfangen von äußeren Stößen, wobei der Drückabschnitt (120):
- an der Außenfläche des Eingriffsabschnitts (110) zum Empfangen von äußeren Stößen geformt ist,
- ein Aussparungsprofil (121) zum Erweitern der Drücklänge des Drückabschnitts (120) aufweist, und
- einen zweiten Härtewert hat, welcher wesentlich kleiner ist als der erste Härtewert des Eingriffsabschnitts.

2. Der Rollbehälter gemäß Anspruch 1, wobei der Geräuschdämpfer (100) ein Verbundstoff-Formteil ist, wobei der Eingriffsabschnitt (110) und der Drückabschnitt (120) aus verschiedenen Stoffen sind, welche verschiedene Härtewerte haben.

3. Der Rollbehälter gemäß Anspruch 1 oder 2, wobei der zweite Härtewert maximal 80% des ersten Härtewerts ist.

4. Der Rollbehälter gemäß Anspruch 1, 2 oder 3, wobei der Härtewert ein Shore-A Wert ist.

5. Der Rollbehälter gemäß Anspruch 4, wobei der erste Härtewert im Bereich von 90 bis 100 Shore-A liegt und der zweite Härtewert im Bereich von 50 bis 70 Shore-A liegt.

6. Der Rollbehälter gemäß irgendeinem der vorhergehenden Ansprüche, wobei das Aussparungsprofil (121) des Drückabschnitts (120) eine Mehrzahl von äußeren Aussparungen aufweist.

7. Der Rollbehälter gemäß Anspruch 6, wobei die Aussparungen Nuten sind.

8. Der Rollbehälter gemäß Anspruch 6 oder 7, wobei die Innenfläche des Eingriffsabschnitts (110) eingerichtet ist, um das Profil des Rollbehälters in einer Art vollständig zu umschließen.

9. Der Rollbehälter gemäß irgendeinem der Ansprüche 1 bis 5, wobei sich der Drückabschnitt (120) ausgehend von der Außenfläche des Eingriffsabschnitts (110) erstreckt, um eine hohle Verformungskavität (121) zu formen, welche durch die besagte Außenfläche des Eingriffsabschnitts (110) und den Drückabschnitt (120) definiert ist, wobei die hohle Verformungskavität (121) eingerichtet ist, um elastisch nachzugeben / zu kollabieren.

10. Der Rollbehälter gemäß Anspruch 9, wobei sich der Drückabschnitt (120) in einer Ringgestalt erstreckt.

11. Der Rollbehälter gemäß Anspruch 9 oder 10, wobei der Drückabschnitt (120) ein integraler Teil des Geräuschdämpferprofils (100) ist.

12. Der Rollbehälter gemäß Anspruch 9, 10 oder 11, wobei der Drückabschnitt (120) im Eingriffsabschnitt (110) integriert ist, wobei der Drückabschnitt (120) ausgehend von einem Punkt des Eingriffsabschnitts (110) vorsteht und in einen anderen Punkt des Eingriffsabschnitts (110) übergeht, um die Verformungskavität (121) innerhalb des Rings zu formen, welcher durch den Drückabschnitt (120) und den Eingriffsabschnitt (110) definiert ist.

## Patentansprüche (Patentansprüche für folgende(n) Vertragsstaat(en): DE)

1. Ein Rollbehälter, aufweisend einen Geräuschdämpfer (100), der aufweist:
- einen Eingriffsabschnitt (110), welcher aus einem Material gemacht ist, das einen ersten Härtewert hat und aufweist:
• eine Innenfläche, welche eingerichtet ist, um mit einem Profil des Rollbehälters in einer zumindest teilweise umgebenden Art im Eingriff zu stchen, und
• eine Außenfläche, welche der Innenfläche entgegengesetzt ist, und
- einen Drückabschnitt (120) zum Empfangen von äußeren Stößen, wobei der Drückabschnitt (120):
• an der Außenfläche des Eingriffsabschnitts (110) zum Empfangen von äußeren Stößen geformt ist,
• ein Aussparungsprofil (121) zum Erweitern der Drücklänge des Drückabschnitts (120) aufweist, und
• einen zweiten Härtewert hat, welcher wesentlich kleiner ist als der erste Härtewert des Eingriffsabschnitts,
**dadurch gekennzeichnet, dass** der zweite Härtewert maximal 80% des ersten Härtewerts ist.

2. Der Rollbehälter gemäß Anspruch 1, wobei der Geräuschdämpfer (100) ein Verbundstoff-Formteil ist, wobei der Eingriffsabschnitt (110) und der Drückabschnitt (120) aus verschiedenen Stoffen sind, welche verschiedene Härtewerte haben.

3. Der Rollbehälter gemäß Anspruch 1 oder 2, wobei der Härtewert ein Shore-A Wert ist.

4. Der Rollbehälter gemäß Anspruch 3, wobei der erste Härtewert im Bereich von 90 bis 100 Shore-A liegt und der zweite Härtewert im Bereich von 50 bis 70 Shore-A liegt.

5. Der Rollbehälter gemäß irgendeinem der vorhergehenden Ansprüche, wobei das Aussparungsprofil (121) des Drückabschnitts (120) eine Mehrzahl von äußeren Aussparungen aufweist.

6. Der Rollbehälter gemäß Anspruch 5, wobei die Aussparungen Nuten sind.

7. Der Rollbehälter gemäß Anspruch 5 oder 6, wobei die Innenfläche des Eingriffsabschnitts (110) eingerichtet ist, um das Profil des Rollbehälters in einer Art vollständig zu umschließen.

8. Der Rollbehälter gemäß irgendeinem der Ansprüche 1 bis 4, wobei sich der Drückabschnitt (120) ausgehend von der Außenfläche des Eingriffsabschnitts (110) erstreckt, um eine hohle Verformungskavität (121) zu formen, welche durch die besagte Außenfläche des Eingriffsabschnitts (110) und den Drückabschnitt (120) definiert ist, wobei die hohle Verformungskavität (121) eingerichtet ist, um elastisch nachzugeben / zu kollabieren.

9. Der Rollbehälter gemäß Anspruch 8, wobei sich der Drückabschnitt (120) in einer Ringgestalt erstreckt.

10. Der Rollbehälter gemäß Anspruch 8 oder 9, wobei der Drückabschnitt (120) ein integraler Teil des Geräuschdämpferprofils (100) ist.

11. Der Rollbehälter gemäß Anspruch 8, 9 oder 10, wobei der Drückabschnitt (120) im Eingriffsabschnitt (110) integriert ist, wobei der Drückabschnitt (120) ausgehend von einem Punkt des Eingriffsabschnitts (110) vorsteht und in einen anderen Punkt des Eingriffsabschnitts (110) übergeht, um die Verformungskavität (121) innerhalb des Rings zu formen, welcher durch den Drückabschnitt (120) und den Eingriffsabschnitt (110) definiert ist.

## Revendications (Revendications pour l'(les) Etat(s) contractant(s) suivant(s): AL, AT, BE, BG, CH, CY, CZ, DK, EE, ES, FI, FR, GB, GR, HR, HU, IE, IS, IT, LI, LT, LU, LV, MC, MK, MT, NL, NO, PL, PT, RO, RS, SE, SI, SK, SM, TR)

1. Conteneur roulant comprenant un silencieux (100), qui inclut une portion d'entrée en prise (110) qui comprend :
- une surface intérieure qui est configurée pour entrer en prise avec un profil du conteneur roulant de manière au moins partiellement enfermante, et
- une surface extérieure opposée à la surface intérieure,
dans lequel le matériau de la portion d'entrée en prise (110) possède une première valeur de duromètre,
**caractérisé par** une portion de compression (120) pour recevoir des impacts externes, laquelle portion de compression (120) :
- est formée sur la surface extérieure de la portion d'entrée en prise (110) pour recevoir des impacts externes,
- comprend un profil en relief(121) pour étendre la longueur de compression de la portion de compression (120), et
- possède une seconde valeur de duromètre qui est sensiblement inférieure à la première valeur de duromètre de la portion d'entrée en prise.

2. Conteneur roulant selon la revendication 1, dans lequel le silencieux (100) est une pièce moulée à composés multiples, dans lequel la portion d'entrée en prise (110) et la portion de compression (120) sont de composés différents possédant des valeurs de duromètre différentes.

3. Conteneur roulant selon la revendication 1 ou 2, dans lequel la seconde valeur de duromètre est au plus 80 pourcent de la première valeur de duromètre.

4. Conteneur roulant selon la revendication 1, 2 ou 3, dans lequel la valeur de duromètre est une valeur shore A.

5. Conteneur roulant selon la revendication 4, dans lequel la première valeur de duromètre est dans la plage de 90 à 100 shore A et la seconde valeur de duromètre est dans la plage de 50 à 70 shore A.

6. Conteneur roulant selon l'une quelconque des revendications précédentes, dans lequel le profil en relief (121) de la portion de compression (120) comprend une pluralité d'évidements externes.

7. Conteneur roulant selon la revendication 6, dans lequel lesdits évidements sont des rainures.

8. Conteneur roulant selon la revendication 6 ou 7, dans lequel la surface intérieure de la portion d'entrée en prise (110) est configurée pour enfermer entièrement le profil du conteneur roulant.

9. Conteneur roulant selon l'une quelconque des revendications 1 à 5, dans lequel la portion de compression (120) s'étend à partir de et jusqu'à la surface extérieure de la portion d'entrée en prise (110) afin de former une cavité de flexion creuse (121) qui est définie par ladite surface externe de la portion d'entrée en prise (110) et la portion de compression (120), dans lequel la cavité de flexion creuse (121) est configurée pour se déformer/s'affaisser de façon élastique.

10. Conteneur roulant selon la revendication 9, dans lequel la portion de compression (120) s'étend de façon bouclée.

11. Conteneur roulant selon la revendication 9 ou 10, dans lequel la portion de compression (120) est une partie intégrante du profil de silencieux (100).

12. Conteneur roulant selon la revendication 9, 10 ou 11, dans lequel la portion de compression (120) est intégrée à la portion d'entrée en prise (110), dans lequel la portion de compression (120) fait saillie à partir d'un point de la portion d'entrée en prise (110) et rejoint un autre point de la portion d'entrée en prise (110) afin de former la cavité de flexion (121) à l'intérieur de la boucle définie par la portion de compression (120) et la portion d'entrée en prise (110).

## Revendications (Revendications pour l'(les) Etat(s) contractant(s) suivant(s): DE)

1. Conteneur roulant comprenant un silencieux (100), qui inclut :
- une portion d'entrée en prise (110) faite d'un matériau possédant une première valeur de duromètre et comprenant :
• une surface intérieure qui est configurée pour entrer en prise avec un profil du conteneur roulant de manière au moins partiellement enfermante, et
• une surface extérieure opposée à la surface intérieure, et
- une portion de compression (120) pour recevoir des impacts externes, laquelle portion de compression (120) :
• est formée sur la surface extérieure de la portion d'entrée en prise (110) pour recevoir des impacts externes,
• comprend un profil en relief(121) pour étendre la longueur de compression de la portion de compression (120), et
• possède une seconde valeur de duromètre qui est sensiblement inférieure à la première valeur de duromètre de la portion d'entrée en prise,
**caractérisé en ce que** la seconde valeur de duromètre est au plus 80 pourcent de la première valeur de duromètre.

2. Conteneur roulant selon la revendication 1, dans lequel le silencieux (100) est une pièce moulée à composés multiples, dans lequel la portion d'entrée en prise (110) et la portion de compression (120) sont de composés différents possédant des valeurs de duromètre différentes.

3. Conteneur roulant selon la revendication 1 ou 2, dans lequel la valeur de duromètre est une valeur shore A.

4. Conteneur roulant selon la revendication 3, dans lequel la première valeur de duromètre est dans la plage de 90 à 100 shore A et la seconde valeur de duromètre est dans la plage de 50 à 70 shore A.

5. Conteneur roulant selon l'une quelconque des revendications précédentes, dans lequel le profil en relief (121) de la portion de compression (120) comprend une pluralité d'évidements externes.

6. Conteneur roulant selon la revendication 5, dans lequel lesdits évidements sont des rainures.

7. Conteneur roulant selon la revendication 5 ou 6, dans lequel la surface intérieure de la portion d'entrée en prise (110) est configurée pour enfermer entièrement le profil du conteneur roulant.

8. Conteneur roulant selon l'une quelconque des revendications 1 à 4, dans lequel la portion de compression (120) s'étend à partir de et jusqu'à la surface extérieure de la portion d'entrée en prise (110) afin de former une cavité de flexion creuse (121) qui est définie par ladite surface externe de la portion d'entrée en prise (110) et la portion de compression (120), dans lequel la cavité de flexion creuse (121) est configurée pour se déformer/s'affaisser de façon élastique.

9. Conteneur roulant selon la revendication 8, dans lequel la portion de compression (120) s'étend de façon bouclée.

10. Conteneur roulant selon la revendication 8 ou 9, dans lequel la portion de compression (120) est une partie intégrante du profil de silencieux (100).

11. Conteneur roulant selon la revendication 8, 9 ou 10, dans lequel la portion de compression (120) est intégrée à la portion d'entrée en prise (110), dans lequel la portion de compression (120) fait saillie à partir d'un point de la portion d'entrée en prise (110) et rejoint un autre point de la portion d'entrée en prise (110) afin de former la cavité de flexion (121) à l'intérieur de la boucle définie par la portion de compression (120) et la portion d'entrée en prise (110).
